Europäisches Patentamt

**European Patent Office**

**Office européen des brevets**

(11) Publication number : **0 438 291 B1**

(12) **EUROPEAN PATENT SPECIFICATION**

(45) Date of publication of patent specification :
28.09.94 Bulletin 94/39

(51) Int. Cl.⁵ : **G04G 15/00, H04N 5/782**

(21) Application number : **91300325.7**

(22) Date of filing : **17.01.91**

(54) **Timer reservation recording system.**

(30) Priority : **18.01.90 JP 10159/90**

(43) Date of publication of application :
**24.07.91 Bulletin 91/30**

(45) Publication of the grant of the patent :
**28.09.94 Bulletin 94/39**

(84) Designated Contracting States :
**DE FR GB**

(56) References cited :
**EP-A- 0 342 964**
**US-A- 4 847 696**
**PATENT ABSTRACTS OF JAPAN, Vol. 11, No.**
**197 (P-589)(2644), 25 June 1987 & JP-A-62 021**
**090**
**PATENT ABSTRACTS OF JAPAN, Vol. 11, No.**
**287 (P-617)(2734), 17 September 1987 &**
**JP-A-62 082 390**

(73) Proprietor : **SONY CORPORATION**
**7-35, Kitashinagawa 6-chome**
**Shinagawa-ku**
**Tokyo (JP)**

(72) Inventor : **Misawa, Seiichi**
**c/o Sony Corporation,**
**7-35 Kitashinagawa 6-chome**
**Shinagawa-ku, Tokyo (JP)**
Inventor : **Tomitsuka, Hidemi**
**c/o Sony Corporation,**
**7-35 Kitashinagawa 6-chome**
**Shinagawa-ku, Tokyo (JP)**
Inventor : **Ishioka, Hideaki**
**c/o Sony Corporation,**
**7-35 Kitashinagawa 6-chome**
**Shinagawa-ku, Tokyo (JP)**

(74) Representative : **Nicholls, Michael John et al**
**J.A. KEMP & CO.**
**14, South Square**
**Gray's Inn**
**London WC1R 5LX (GB)**

## Description

This invention relates to a timer reservation recording system, for example, for video tape recorders.

Conventional video tape recorders are capable of performing recording under the control of a timer.

With this function, the user can record desired programs only by previously inputting reservation information.

When reservation information is input in practice, each of the elements thereof (hereinafter referred to as reservation information elements), such as the channel of the recording, time to start the recording, and time to end the recording, must be sequentially input by repeatedly operating members. When an erroneous input is made, the desired program is recorded correctly.

It is difficult to record a desired program easily and positively using the timer since laborious operations must be repeated without any error.

To solve this problem, various methods have been proposed, for example; synthetic voice output to prompt an operation of an operating member in response to an operation of the same or another operating member, or bar codes for use in place of operating members as means of inputting reservation information.

However, erroneous input of reservation information cannot be avoided even by the methods above mentioned, and such solutions are still not sufficient.

In view of the foregoing, an aim of this invention is to provide a timer reservation recording system which is capable of timer record desired programs easily and positively.

According to the present invention there is provided a timer reservation recording system comprising input means for sequentially inputting reservation information elements indicating programs to be recorded and the time for recording and for outputting the reservation information; displaying means for displaying said reservation information; and storing means for storing said reservation information, the system being characterized in that it further comprises;

database means for sharing previously input reservation information together with certainty degree information which is renewed when said reservation information is input and;

database management means for managing the database of said database means; and wherein:

when said reservation information elements are input via said inputting means, said database management means searches said shared reservation information for reservation information elements which are similar or identical to the input reservation information elements from said data base means, and displays said searched reservation information as a proposed reservation information element for said each reservation information element input to said input means, according to said certainty degree information of said searched reservation information.

A piece of past reservation information having a reservation information element which is identical to an inputted reservation information element is searched from data base means, and according to the certainty degree information, the searched reservation information is displayed as proposed reservation information. In this manner, it is possible to easily and positively record a desired program by reflecting a user's habit to the input of the reservation information.

The present invention will be further explained hereinafter with reference to the following detailed description of exemplary embodiments and the accompanying drawings in which:

FIG. 1 is a block diagram showing the timer reservation recording system in accordance with the one embodiment of the present invention;

FIG. 2 is a plan view illustrating the remote commander;

FIG. 3 is a diagrammatic view illustrating the habit database;

FIG. 4 is a diagrammatic view illustrating the registration packet;

FIGS. 5 to 13 art diagrammatic views illustrating data of the habit database;

FIG. 14 in a flow chart showing the initialization procedure;

FIG. 15 is a flow chart showing the processing of the input sentence;

FIG. 16 is a flow chart showing the renewal registration procedure of the habit database;

FIGS. 17 to 23 are diagrammatic views illustrating the operation thereof;

FIG. 24 is a flow chart showing the modification procedure of the reservation information;

FIGS. 25 to 27 are diagrammatic views illustrating the operation thereof;

FIG. 28 is a flow chart showing the cancelation procedure of the reservation information; and

FIG. 29 is a flow chart showing the periodical renewal procedure of the habit database.

Referring to the drawings, embodiments of the present invention will be described hereinafter.

(1) Construction of the Embodiment

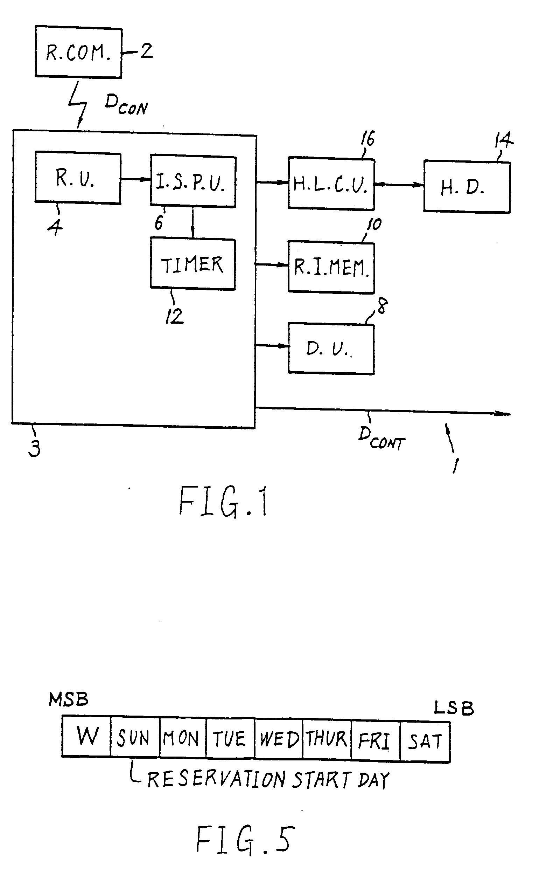

In FIG. 1, 1 generally designates a timer reservation recording system of a video tape recorder, and the timer reservation recording system is actuated according to reservation information inputted from a remote commander 2.

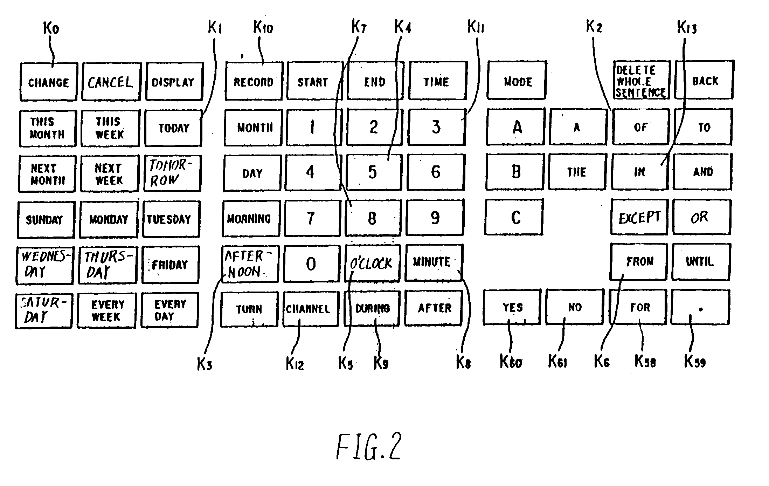

As shown in FIG. 2, the remote commander 2 has operation members $K_0$ - $K_{61}$ disposed on an operation panel thereof, and operation information $D_{CON}$ is sent to a reservation information input unit 3 in response to operations of operation members $K_0$ - $K_{01}$.

The reservation information input unit 3 receives the operation information $D_{CON}$ at a receiving unit 4 and the operation information $D_{CON}$ is analyzed in an input sentence processing unit 6 having a configuration of an arithmetic processing circuit.

The user can conduct a timer reservation in a sentence in a natural language format by operating the operation members of the remote commander 2 in a desired order.

More specifically, on the operation panel, there are arranged: operation members to input information of numerals "1" to "0": operation members to input a record day, "this month", "this week", ..., "next month", "next week", ... "Sunday", "Monday", ..., "every week", "every day", "month", and "day"; operation members to input record time, "time", "morning", "afternoon", "o'clock", "minute"; and operation members of "during" and "after".

In addition to operation members, such as an operating member to input where the reservation order, "turn" and an operating member to input the channel, "ch", there are further disposed operation members to input operations, such as "change", "delete" and "record", operation members such as prepositions "of", "to", "in", "on", "between", operation members of punctuation ".", and operation members of "yes" and "no".

With these operation members, for example, a sentence in a natural language format (hereinafter referred to as reservation sentence) can be inputted by sequentially operating operation members of "record" "from" "5" "o'clock" "in" "afternoon" "of" "today" "8" "minute" ".".

The reservation information input unit 3 analyzes the inputted reservation sentence at the input sentence processing unit 6 and thereby extracts reservation information elements from the inputted reservation sentence.

If a timer reservation is performed in a sentence of a natural language, the same program may be recorded by inputting according to the user's habit "The Television broadcasting of 4 channel should be recorded from 9 P.M. to 10 P.M." or "The Television broadcasting of 4 channel should be recorded from 9 P.M. to 10 P.M. on January 1.

In connection with the recording time, there are cases of input such as "from 9 P.M. to 10 P.M.", "from 21 o'clock to 22 o'clock" to indicate in 24 hour format, and "one hour from 9 P.M." to indicate record start time and record hour.

Thus, in the reservation information input unit 3, the reservation sentence is analyzed on the basis of grammar to extract reservation information elements, and timer reservations are positively carried out even by different users with a remote commander.

In this event, the input sentence processing unit 6 discriminates users who have inputted the reservation sentence according to the order of inputting reservation information elements and how to express the recording time which are different by users.

In this manner, the timer reservation recording system 1 assists the timer reservation operation for different users.

After displaying the inputted reservation sentence in a display unit 8 which is constituted by a liquid crystal display unit, the reservation information input unit 3 sequentially inputs analyzed reservation information elements to a reservation information memory unit 10 when an operating member for confirmation "yes" is actuated on.

Furthermore, the reservation information input unit 3 detects present time by a timer 12 and loads reservation information elements stored in the reservation information memory unit 10 at a predetermined cycle for judging whether or not it is the record start time.

In this manner, the reservation information input unit 3 outputs a control data $D_{CONT}$ according to the reservation information when it is the record start time and thereby a timer reservation is started. When it is the record end time, the control data $D_{CONT}$ is outputted to end the timer reservation.

Moreover, the reservation information input unit 3 refers to the past reservation information registered in a habit database 14 when the reservation information is inputted and thereby judges whether or not all the necessary reservation information elements are inputted. In the case where the reservation information elements are not sufficient, a message to prompt an input is displayed through the display unit 8.

In this event, the reservation information input unit 3 displays past reservation information in a selective manner to assist the user's input operation.

For this purpose, the reservation information input unit 3 inputs reservation information to and outputs it from a habit learning control unit 16 according to the need.

(1-1) Habit Database

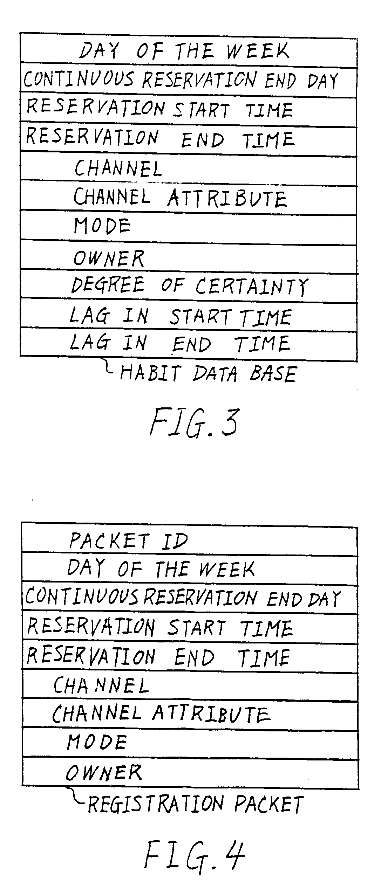

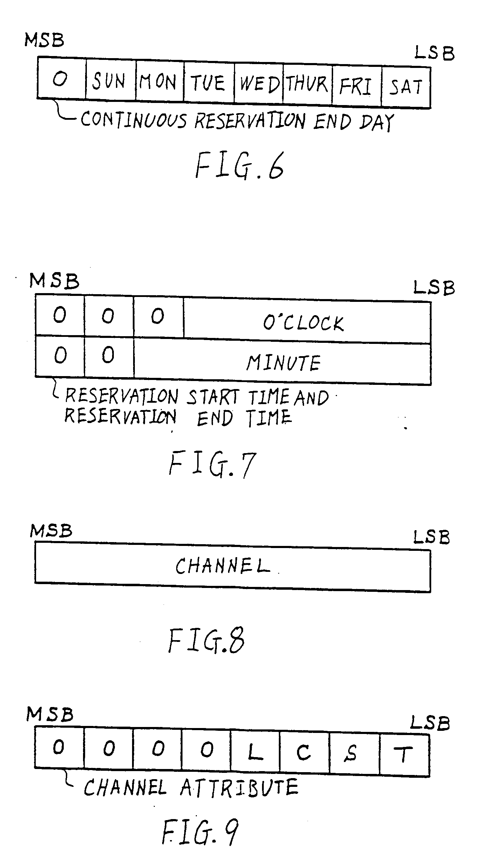

As shown in FIGS. 3 and 4, the habit database 14 registers reservation information, outputted from the habit learning control unit 16, with the degree of certainty thereof for each program.

More specifically, the habit database 14 receives a registration packet from the input sentence processing unit 6 through the habit learning control unit 16 and removes a packet ID for packet identification from the registration packet, which is then registered with certainty degree information indicating a frequency of use of the reservation information, record start time and record end time.

As illustrated in FIGS. 5 and 6, in the registration packets and the habit database 14 a day of the week (a record start day of the week in a case of continuous reservation) and whether or not the reservation information is an every week reservation (designated by the letter W) are expressed in 8 bit data. In a case of a continuous reservation, the following data represents the day of the end of the continuous reservation.

In addition to this, the record start time and the record end time are, as shown in FIG. 7, represented by the following 16 bits data. In this case, they are expressed in 24 hour format with o'clock data and minute data separated from each other.

As illustrated in FIGS. 8 and 9, a line input (indicated by letter L), a cable television (indicated by letter C), a satellite broadcasting (indicated by letter S) and an ordinary television broadcasting (indicated by letter T) are discriminated by channel attribute data, and the channel of an input source specified by a channel attribute is expressed by a channel data.

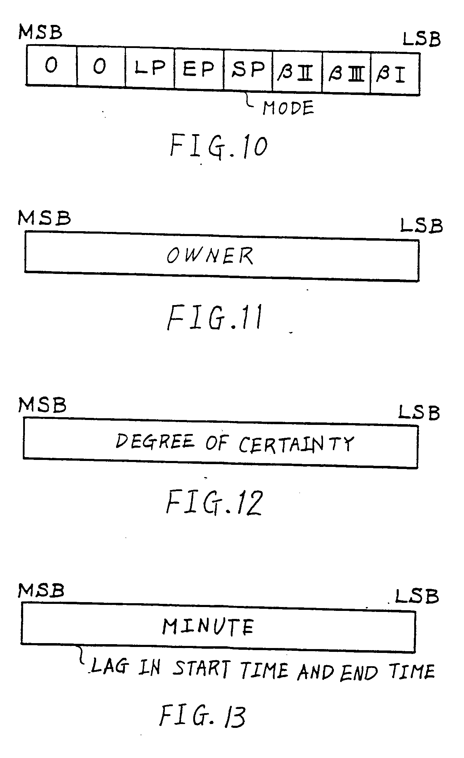

As shown in FIGS. 10 and 11, the following data "mode" and data "owner" represent a recording mode of the video tape recorder and a user, who has inputted the reservation information, respectively.

In the embodiment, reservation information is registered for individual users who have inputted it, and the past reservation information is selectively displayed to assist the timer reservation operation of the user.

The following data represents a degree of certainty as shown in FIG. 12, in which the value may be registered up to a number of 100, and thereby the frequency of use of the reservation information is quantitatively expressed.

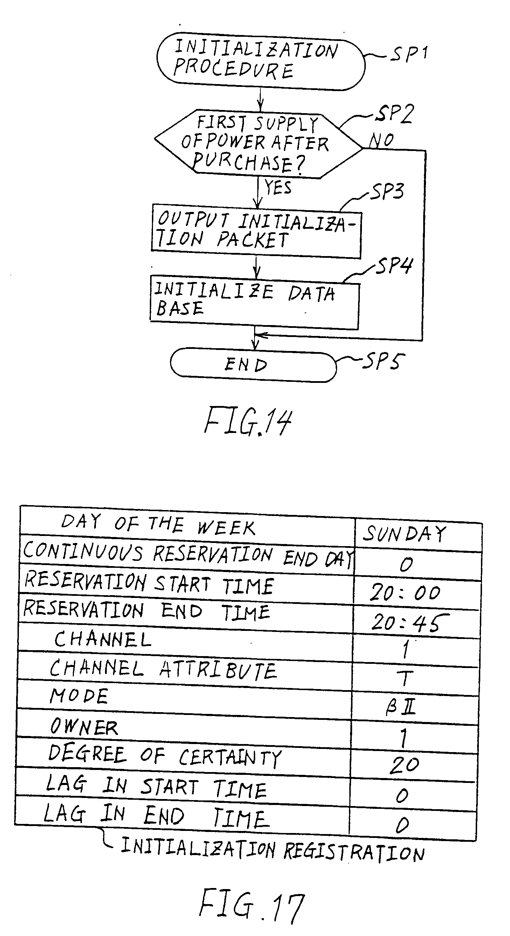

As illustrated in FIG. 13, the following data "start time difference and end time difference" represents differences from repeatedly reserved record start time and record end time of the same program, so that the original reservation information may be reconstructed even if the reservation information repeatedly inputted is renewed.

In the ordinary television broadcasting, a commercial film or the like is broadcast at the beginning. For example, there is a case where the program is broadcast from two minutes past nine.

In this case, the user may set the record start time to nine o'clock or two minutes past nine.

In the record end time of a program such as a night game, there can be a case where the end time is delayed, and hence the record end time of the program may be set to ten o'clock or half past ten.

In view of this, in the embodiment each of the record start time and the record end time may be set to have a permissible range of 5 to 40 minutes before and after the time. Within the permissible range, it is possible to judge whether or not the reservation information relates to the same program.

(1-2) The Inputted Sentence Processing Unit and the Habit Learning Control Unit

The habit learning control unit 16 registers reservation information, outputted from the input sentence processing unit 6, to the habit database 14 and when the information of the same program was already registered, the habit learning control unit 16 renews the past registered reservation information.

Furthermore, in this event, the reservation information of the same program is searched from the registered reservation information and is displayed on the display unit 8 to assist the user's timer reservation operation according to the need.

For this purpose, the habit learning control unit 16 initializes the habit database 14 at the beginning.

(1-2-1) Initialization of the Habit Database

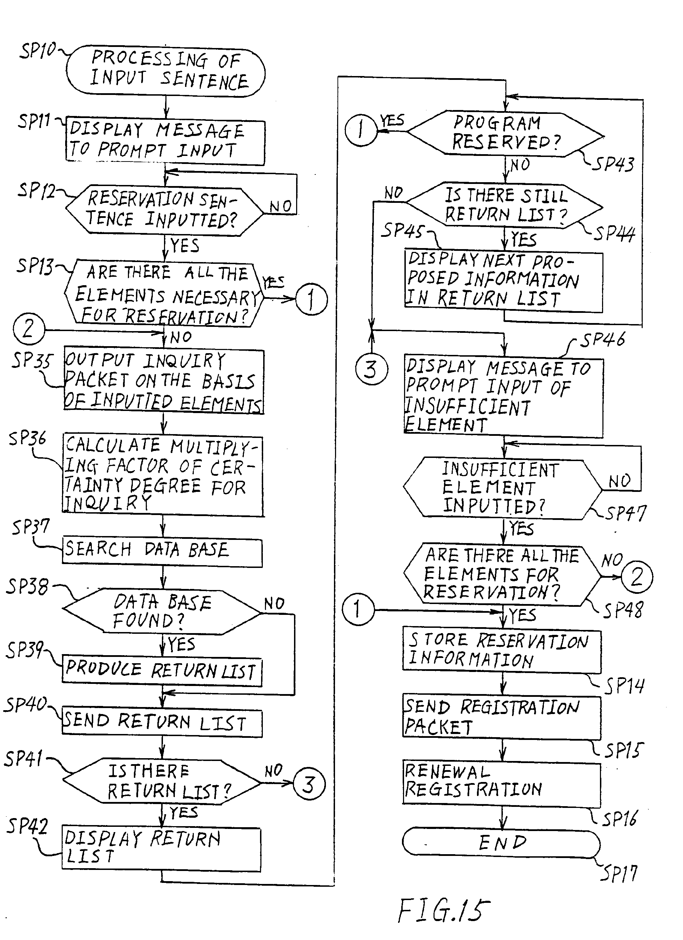

When the timer reservation recording system 1 proceeds from a step SP1 to a step SP2 as illustrated in FIG. 14, the input sentence processing unit 6 judges whether or not the making of the power is for the first time after the purchase of the video tape recorder.

When a predetermined operating member (not shown) is actuated, the timer reservation recording system 1 proceeds to a step SP3, in which an initialization packet is outputted from the input sentence processing unit 6 to the habit learning control unit 16.

The initialization packet is a packet (FIG. 4) in which the packet ID is set to a value of 6 and the owner data is set to a value of 255.

When the initialization packet is inputted, the habit learning control unit 16 initializes the habit database 14 in the step SP4, and then in a step 5 the procedure is completed.

On the contrary, when a negative result is obtained in the step SP2, the procedure is similarly completed in the step SP5.

(1-2-2) Renewal and Registration of the Habit Database

When the initialization operation is completed, the habit learning control unit 16 registers the reservation information outputted from the input sentence processing unit 6 and constructs the habit database 14.

More specifically, as shown in FIG. 15, when the remote commander 2 is operated, the timer reservation recording system 1 proceeds from a step SP10 to a step SP11, in which a message to prompt an input of a reservation sentence is displayed on the display unit 8. Then, the timer reservation recording system 1 proceeds to a step SP12 in which whether or not the reservation sentence is inputted is judged.

When the input sentence is not inputted, a negative result is obtained, and the input sentence processing unit 6 repeats the step SP12.

On the contrary, when the input sentence is inputted, an affirmative response is obtained, and then the input sentence processing unit 6 proceeds to a step SP13. After the input sentence is analyzed, it is judged as to whether or not all the necessary reservation information elements are inputted.

When an affirmative outcome is obtained in the step SP13, the program proceeds to a step SP14. After the reservation information is stored in the reservation information memory unit 10, the program proceeds to a step SP15, in which a registration packet is produced from the inputted reservation information elements, and the registration packet is sent to the habit learning control unit 16.

Thus, in the input sentence processing unit 6 a timer reservation is set according to the inputted reservation information and then the reservation information is outputted to the habit learning control unit 16.

In response to this, the habit learning control unit 16 executes a renewal registration processing of the habit database 14 on the basis of the registration packet outputted form the input sentence processing unit 6 and then in a step SP17 the procedure is completed.

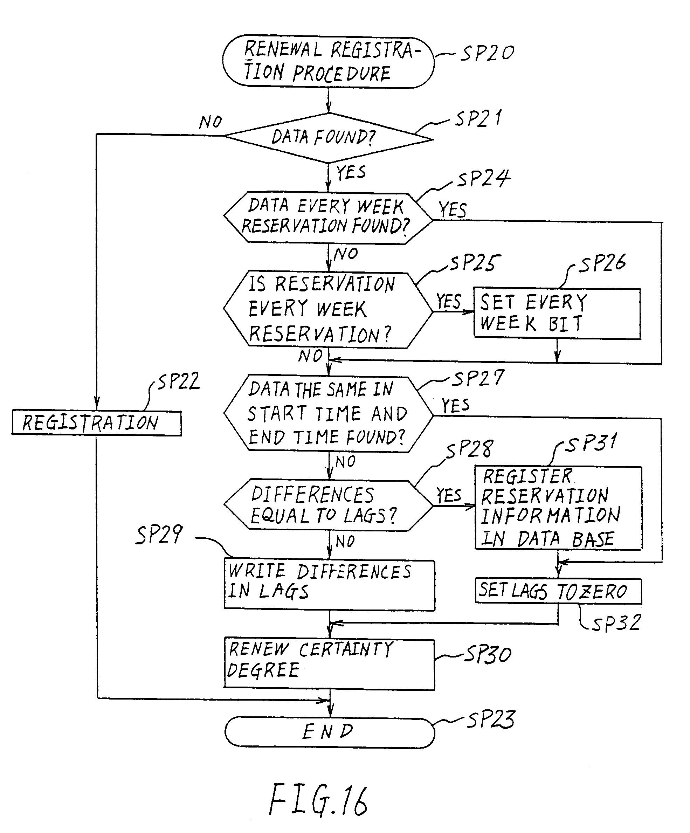

As shown in FIG. 16, the habit learning control unit 16 proceeds from a step SP20 to a step SP21, and then the renewal registration processing starts by making a judgement on the registration packet, sent from the input sentence processing unit 6, as to whether or not reservation information of the same program has been already registered.

More specifically, the habit learning control unit 16 searches reservation information, which is in agreement in data with the registration packet, from the reservation information registered in the habit database 14, the data including a day of the week, a continuous reservation end day (of which the most significant bit W indicating whether or not the reservation information is an every week reservation is removed), a channel, a channel attribute and the owner.

Furthermore, the habit learning control unit 16 searches from the searched reservation information in which the record start time and the record end time fall within the respective permissible range.

By this procedure, the habit learning control unit 16 makes a judgement as to whether or not the program was timer reserved in the past and whether or not the reservation information thereof was already registered in the habit database 14.

When the same program was not timer reserved in the past, the reservation information of the same program cannot be searched from the habit database 14 and hence a negative result is obtained in the step SP21, and thus the habit learning control unit 16 goes to a step SP22, in which the registration packet is registered in the habit database 14.

In this event, the habit learning control unit 16 registers the registration packet in the habit database 14 by setting differences in the start time and the end time to zero and the certainty degree to 20.

About reservation information of an every week reservation, the registration packet is registered in the habit database 14 with the certainty degree set to 60.

This is because an every week reservation has a high frequency of use, and the reservation information inputted is judged to be fairly certain.

The reservation information of the every week reservation is registered taking the situation of the use into consideration by setting the certainty degree to a value larger than in ordinary reservation information.

Thus, the habit learning control unit 16 completes the procedure by proceeding to a step SP23 after the registration of the reservation information is completed.

After the habit database 14 is initialized, the reservation information is accumulated in turn by repeating the operation of timer reservation, and thereby the database of the reservation information is constructed.

On the contrary, in a case where the same program was timer reserved in the past, the reservation information of the same program can be detected by searching in the habit database 14.

In this case, in the habit learning control unit 16 an affirmative result is obtained in the step SP21, and a renewal of the registration packet starts by proceeding to a step SP24.

More specifically, the habit learning control unit 16 judges whether or not the reservation information which is of the same program as the searched registration packet is an every week reservation. When a negative result is obtained, a judgement as to whether or not the reservation information of the registration packet is an every week reservation is made in a step S25.

When an affirmative result is obtained by this judgement, the habit learning control unit 16 goes to a step SP26, in which a discrimination bit W of the every week reservation (FIG. 5) is set to a value of 1, and the habit database 14 is renewed about the searched reservation information.

Thus, the habit learning control unit 16 changes the registered reservation information to the reservation information of the every week reservation and goes to a step SP27.

On the other hand, the habit learning control unit 16 proceeds to a step SP27 when an affirmative result and a negative result are obtained in the steps SP24 and SP25, respectively, and a judgement is made as to whether or not the registration packet and the searched reservation information agree in the record start time and the record end time.

When a negative result is obtained in this step, the habit learning control unit 16 goes to a step SP28, in which after differences in the record start time and the reservation end day are detected, a judgement is made as to whether or not the differences are in agreement with the differences in the start time and the end time.

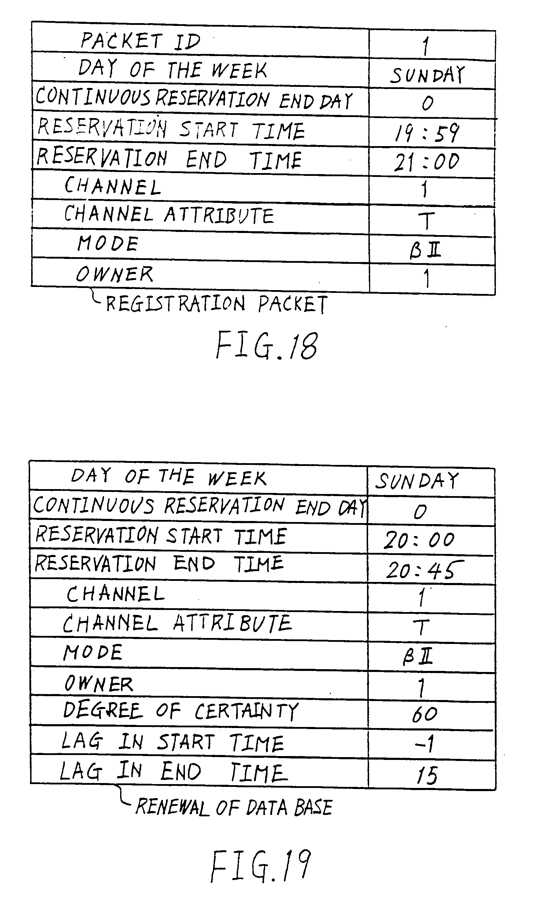

In a case where a registration packet which is slightly different in each of the record start time and the record end time, as shown in FIG. 18, from the registered reservation information, as shown in FIG. 17, is inputted, a negative result is obtained in a step SP28. Then, the habit learning control unit 16 proceeds to a step SP29.

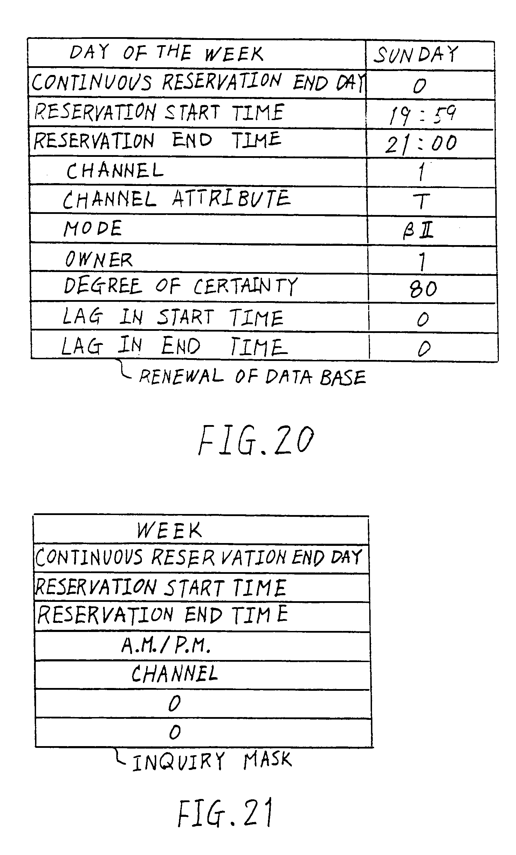

Here, the habit learning control unit 16 records the differences in the record start time and the record end time in the differences in the start time and the end time of the registered reservation information respectively as in FIG. 19 and then goes to a step SP30, in which the degree of certainty is renewed. More specifically, the degree of certainty of the registered reservation information is renewed by executing an operation of the following equation by making the degree of certainty of the searched reservation information as a current value:

Probability = (Current Value + 100)/2    (1)

and then the procedure is completed in a step SP23.

When the registration packet which is slightly different in the record start time and the record end time within the permissible range is inputted, the differences in the record start time and the record end time is registered in differences in the start time and the end time respectively in this manner, and then the renewal is carried out to increase the degree of certainty. Thus, the habit database 14 is renewed.

The value of the certainty degree is gradually enlarged by repeating the timer reservation of the same program.

On the other hand, when after the database is renewed as shown in FIG. 19, for example, the registration packet of FIG. 18 is inputted again, an affirmative result is obtained in the step SP28, and the habit learning control unit 16 goes to a step SP31.

In this step, the habit learning control unit 16 replaces the registered reservation information with the reservation information of the registration packet by renewing the habit database 14 by the reservation information of the registration packet.

Then, the habit learning control unit 16 proceeds to a step SP32, in which the differences in the start time and the end time are set to zero, after which it goes to the step SP30.

Thus, as shown in FIG. 20, the timer reservation of the same program is continuously repeated two times while the reservation information of the same program was already registered in the habit database 14. When the two timer reservations consist of exactly the same reservation information elements, the habit database 14 is renewed to have the second reservation information.

The renewal procedure of the equation (1) is repeated by inputting the reservation information of the same program three times, and hence the degree of certainty is successively changed to 20, 60 and 80. Thus, the certainty degree is increased every time when the timer reservation of the same program is repeated.

On the other hand, when a registration packet as shown in FIG. 18 is inputted to the registered reservation information of FIG. 20, or when a registration packet to construct the database as shown in FIG. 17 is inputted to the registered reservation information of FIG. 19, an affirmative result is obtained in the step SP27, and then the habit learning control unit 16 goes to the step SP32.

Thus, in the database, the reservation information, inputted the last time, of the same program is maintained and only the certainty degree is renewed, in which case the certainty degree is increased every time when the timer reservation of the same program is repeated.

In this manner, in the habit database 14, reservation information of a new program is registered when the program is timer reserved, whereas registered reservation information is renewed together with the degree of certainty thereof when the same program as the program which was timer reserved in the past is timer reserved. Thus, the database is constructed by reflecting the habit of the user.

The more the timer reservation is repeated, the more the certainty degree of the reservation information increases. It is thus judged that in the reservation information registered in the habit database 14, the larger the certainty degree thereof becomes the higher the timer reservation of the program becomes in frequency.

Thus, even in a case where not all the reservation information elements are inputted, reservation information which is in agreement in inputted reservation information elements may searched and the certainty degree thereof may be detected. In this manner, the reservation information the user wishes to timer reserve can be roughly detected.

For example, the timer reservation operation can be assisted by displaying searched reservation information in a descending order of the degree of certainty for the judgement of the user, and the incomplete reservation information can be supplemented.

On the basis of this principle, the timer reservation recording system 1 assists the user's timer reservation operation, and thereby any erroneous input is effectively prevented while the operation is simplified.

More specifically, in the case where not all the reservation information elements are contained in the reservation sentence, a negative result is obtained in the step SP13(FIG. 15), and the input sentence processing unit 6 goes to a step SP35 in which an inquiry packet is sent.

Here, the inquiry packet is a search packet in which the reservation information elements are set to zero, the reservation information elements having been not inputted in the registration packet.

To correspond to this, the habit learning control unit 16 proceeds to a step SP36, in which a multiplying factor is set to perform a point addition processing of the degree of certainty.

For this, in the step SP36 the habit learning control unit 16 produces an inquiry mask from the inquiry packet as shown in FIG. 21. When reservation information elements except zero are allotted to the inquiry packet, a data with a value of 1 is set to corresponding areas of the inquiry mask.

Accordingly, the habit learning control unit 16 detects which reservation information element is inputted by detecting the data of a value 1.

When only a day of the week is set in the input sentence, the habit learning control unit 16 sets the multiplying factor to a value of 1.5 whereas when only a day of the week and A.M./P.M. are indicated, the multiplying factor is set to 1.3.

Similarly, when only a day of the week and a channel are indicated, the multiplying factor is set to 2, and when only a day of the week and a record start time or only a day of the week and a record end time are designated, the multiplying factor is set to 2.5.

Furthermore, when only a day of the week, a record start time and a channel are indicated, or only a day of the week, a record end time and a channel are instructed, the multiplying factor is set to 3. When only a day of the week, A.M./P.M. and a channel are indicated, the multiplying factor is set to 2.5.

The habit learning control unit 16 then proceeds to a step SP37, in which the reservation information which is in agreement in reservation information elements with the inquiry packet is searched among the habit database 14 (reservation information which is in agreement in the reservation start and end times within permissible ranges is searched).

The habit learning control unit 16 subsequently proceeds to a step SP38, in which a point addition processing is carried out on the degree of certainty of each element of the searched reservation information.

The point addition processing is a processing to multiply the degree of certainty of each element of the reservation information by the multiplying factor of the point addition processing set in the step SP36, and the degree of certainty is changed according to the degree of agreement of the reservation information element by setting the multiplying factor depending on the reservation information element indicated.

More specifically, even in a case where 10 elements of the reservation information are searched in total by referring to only a day of the week, the number of the reservation information to be searched is reduced by an increase in clue if the search is conducted by adding a reservation start time.

Consequently, in each element of the searched reservation information there is a difference in probability of the reservation information being of the same program as the program to be timer reserved by the user between the case where the search is executed on only a clue of a day of the week and the case where the search is made only on the day of the week and reservation start time.

Thus, the degree of certainty which increases according to the frequency of reservation undergoes the point addition processing according to the degree of agreement of the reservation information elements, and in the result of the point addition processing, the larger the value thereof, the larger the probability of the program being the program the user wished to timer reserve.

Furthermore, in the point addition processing the difference in the reservation end time is detected between elements of the reservation information which are not exactly in agreement, and weighting is made according to the difference.

More specifically, in a case where exact agreement exists in the reservation end time, it is judged that the reservation information in agreement is a very large in probability of the reservation information being of the same program whereas the larger the difference the smaller the degree of certainty.

Thus, the degree of certainty which is difficult to be quantitatively treated can be expressed in the outcome of the weighting by weighting the degree of certainty according to the difference in the reservation end time.

In the embodiment, the habit learning control unit 16 performs the weighting of the degree of certainty using a membership characteristic function which has a value of 1 to 0.25 to correspond to the difference in the reservation end time of 10 to 40 minutes, and the database is thereby searched by applying the technique of the fuzzy reasoning.

When any day of the week is not instructed, the habit learning control unit 16 returns to the step SP11 to display a message to prompt an input without executing the searching procedure.

Furthermore, in the step SP38 the habit learning control unit 16 performs a foot or small value cutting procedure, in which reservation information having a point addition processed degree of certainty of a value 30 or below is detected and is removed from the search outcome of the reservation information.

When reservation information having a point addition processed degree of certainty above 30 in is obtained, in the step SP40 the habit learning control unit 16 sends the reservation information to the input sentence processing unit 6 in a descending order of the degree of certainty after in the step SP39 a return list of the reservation information is produced.

When no reservation information having a value above 30 is obtained in the step SP38, the habit learning control unit 16 proceeds to the SP40 and send a return list in which each of the reservation information elements is set to a value 0.

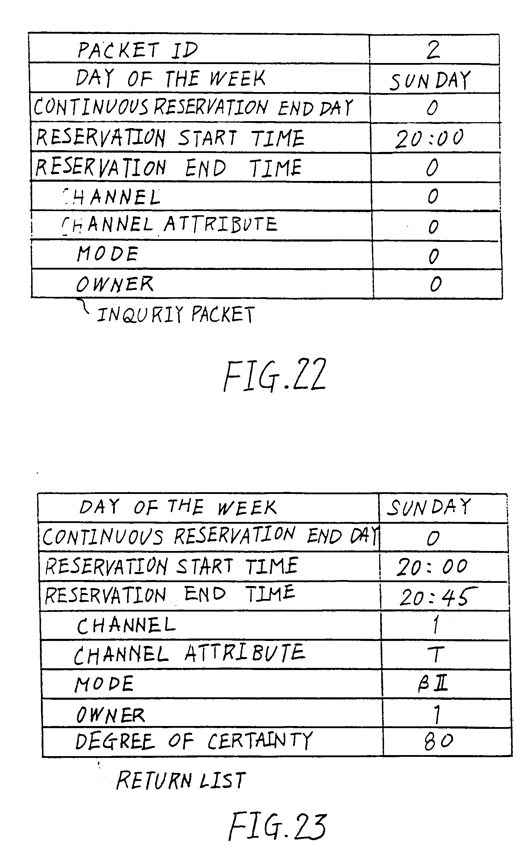

Thus, when a reservation sentence "A record is to be taken from 8 P.M. on Sunday.", for example, is inputted, an inquiry packet having a zero value set except in the day of the week and the record start time is produced as shown in FIG. 22, and then the database is searched. Then, a return list or return lists as in FIG. 23 are returned.

According to this, the habit learning control unit 16 searches reservation information already registered in response to the reservation information elements instructed and successively outputs reservation information having high probabilities as the same program to the input sentence processing unit 6.

When the return list or return lists are returned, in a step SP41 the input sentence processing unit 6 judges whether or not the return list is sent back with the reservation information elements. When an affirmative result is obtained here (which means that at least one piece of reservation information with a high probability of being of the same program as the reservation information has been searched in the habit database 14), a return list with a largest degree of certainty is displayed in the display unit 8 in the step SP42.

Thus, according to the reservation information elements incompletely inputted, the user can confirm reservation information with the largest probability of being of the same program among the reservation information registered in the past in the habit database 14.

In this event, the input sentence processing unit 6 displays a message "Do you wish to record this program?" together with the return list and then goes to a step SP43, in which it waits for an input of "Yes" or "No" by the operating member.

When the user activates the operating member of "No", the input sentence processing unit 6 proceeds to a step SP44, in which a judgement is made as to whether or not another return list with reservation information elements is returned.

When a plurality of return lists are sent back, an affirmative result is obtained and the input sentence processing unit 6 goes to a step SP45, in which a return list with the second largest degree of certainty is displayed.

Thus, the reservation information pieces searched in the habit learning control unit 16 can be successively displayed from a piece of the reservation information with the highest degree of certainty by repeating the loop LOOP1 of the steps SP43, SP44, SP45 and SP43, and thereby pieces of the reservation information the user may need can be successively displayed from the most probable piece.

On the other hand, when return lists which the user needs are displayed, in the step SP43 an affirmative result is obtained by activating the operating member "Yes", and then, the input sentence processing unit 6 goes to the step SP14, in which the reservation information is stored in the reservation information memory unit 10. Thus, reservation information which has been inputted in an incomplete form is supplemented to positively make the timer reservation.

Thus, the user may input a reservation sentence such as "A recording should be made in the afternoon on Sunday", for example, without inputting reservation information in a perfect form always, and thereby the timer reservation may be made only by turning on the operating member after reservation information which is displayed one by one according to the past reservation information is confirmed.

Accordingly, the timer reservation operation is simplified.

Moreover, the reservation information can be stored in the habit database 14 by reflecting the user's habit, and the timer reservation can thereby be assisted according to the reservation information. Thus, the program the user wishes can be speedy displayed and then timer reserved, and hence the timer reservation recording system 1 is enhanced in facility.

Subsequently, the input sentence processing unit 6 converts the return list to a registration packet in the step SP15 and output the registration packet to the habit learning control unit 16, and thus after the reservation information of the return list is renewed, the procedure is completed in the step SP17.

On the other hand, in a case where a return list with reservation information elements cannot be obtained as a result of the searching of the habit database 14, a negative result is obtained in the step SP41, and the input sentence processing unit 6 proceeds to a step SP46.

Similarly, when reservation information the user wishes is not contained in the return list, a negative result is obtained in the step SP44, and the input sentence processing unit 6 goes to the step SP46.

After displaying a message to prompt an input of insufficient reservation information elements, the input sentence processing unit 6 proceeds to a step SP47, in which it is judges whether or not the insufficient reservation information elements are inputted.

When a negative result is obtained in the step, the step SP47 is repeated until the reservation information elements are inputted. When an affirmative result is obtained, in a step SP48 a judgement is made as whether or not all the reservation information elements are inputted.

In the step, a negative result is obtained when all the reservation information elements are still not inputted, and then the input sentence processing unit 6 returns to the step SP35, in which an inquiry packet is produced and then the habit database 14 is searched.

In this manner, the habit database 14 is searched according to the reservation information inputted in the incomplete form, and thereby the reservation information of the same program is detected. Thus, the timer reservation can be performed.

On the other hand, when insufficient reservation information elements are inputted, an affirmative result is obtained in the step SP48 and then the input sentence processing unit 6 proceeds to the step SP14.

After in this step, the reservation information is stored in the reservation information memory unit 10 on the basis of the reservation information supplemented in the step SP47, the habit database 14 is renewed for registration and thereby the timer reservation is made.

### (1-2-3) Modification of the Habit Database

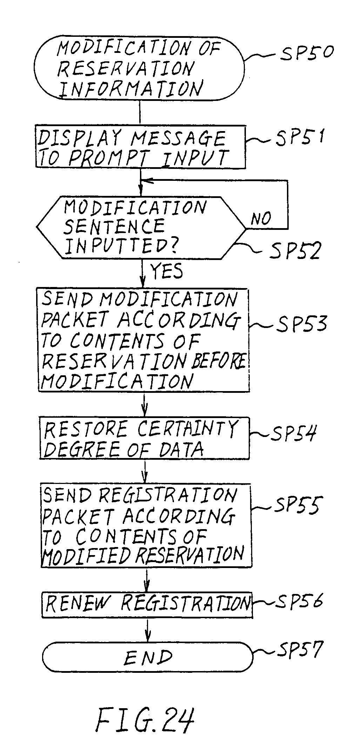

On the other hand, when the reservation information already timer reserved is modified by operating the remote commander 2, the input sentence processing unit 6 and the habit learning control unit 16 execute a procedure shown in FIG. 24, in which the habit database 14 which has been renewed in the timer reservation is restored to the original state before the timer reservation and is then renewed again.

More specifically, the input sentence processing unit 6 moves from a step SP50 to a step SP51 when the operating member of the "modification" of the remote commander 2 is turned on, and thereby a message to prompt an input is displayed.

In this event, the input sentence processing unit 6 displays the reservation information stored in the reservation information memory unit 10 to thereby assist the user's modification operation.

Subsequently, the input sentence processing unit 6 proceeds to a step SP52, in which it is judged whether or not a sentence which expresses the contents of the modification (hereinafter referred to as modification sentence) is inputted.

A negative result is obtained when the modification sentence is not entered in this step, and the input sentence processing unit 6 repeats the step SP52. When the modification sentence is entered, an affirmative result is obtained, and the input sentence processing unit 6 proceeds to a step SP53.

In this step, the input sentence processing unit 6 forms a modification packet according to the reservation information of the modification sentence entered and sends it to the habit learning control unit.

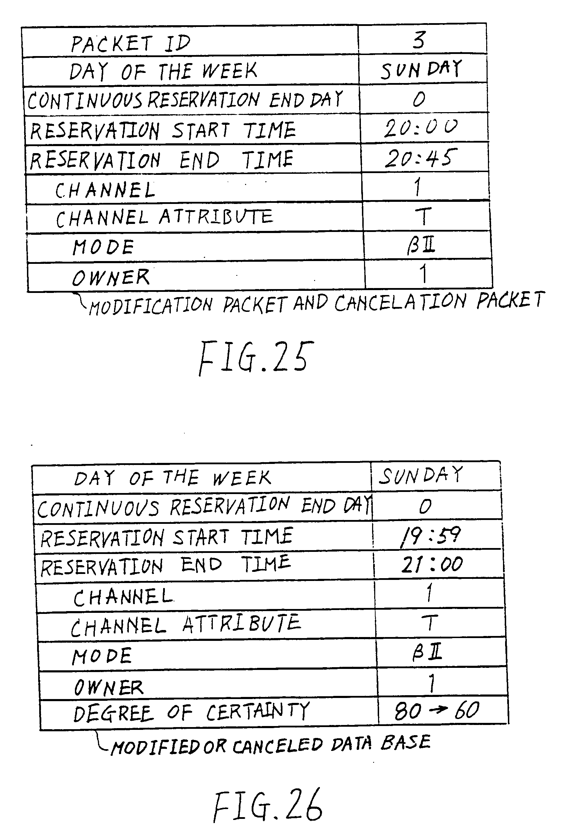

As illustrated in FIG. 25, a packet ID which is different from that of the registration packet is assigned to the modification packet, and the modification packet is discriminated from the registration packet by this ID.

In response to this, the habit learning control unit 16 detects reservation information of the same program as the program of the modification packet from the habit database 14 in the step SP54 and restores the degree of certainty to the original value.

More specifically, to correspond to the equation (1) the operation of the following equation is executed:

$$\text{Degree of certainty} = 2 \times \text{Current value} - 100 \qquad (2)$$

and the degree of certainty of the reservation information is restored to the previous value before the timer reservation as shown in FIG. 26.

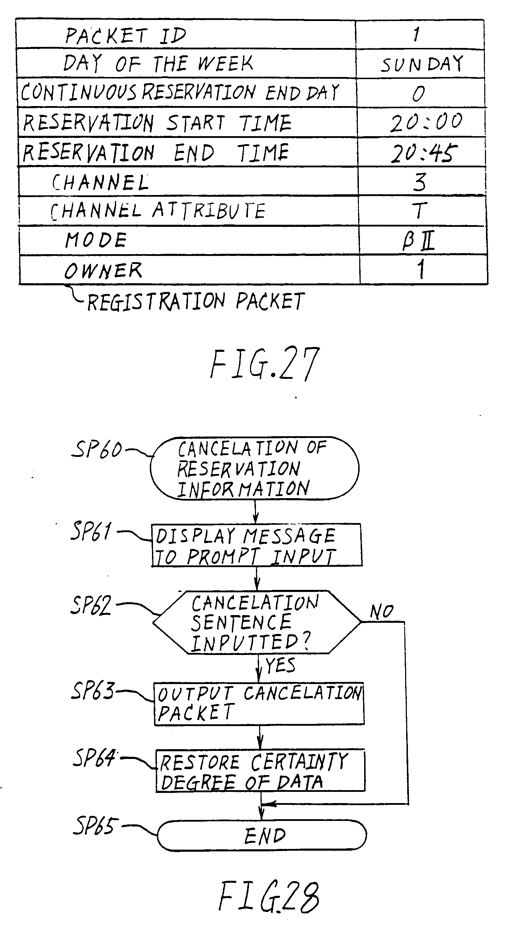

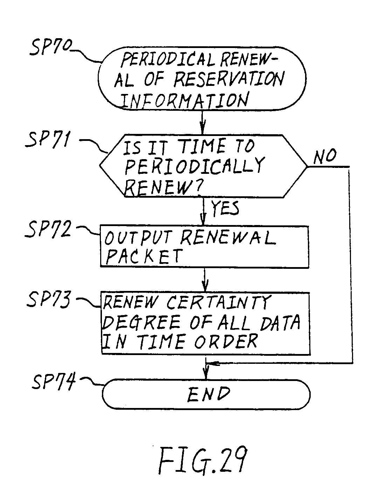

After restoring the degree of certainty to the previous value, in a step SP55 the input sentence processing unit 6 subsequently produces a registration packet from reservation information elements of the modification sentence as shown in FIG. 27 and outputs it to the habit learning control unit 16, and at the same time the input sentence processing unit 6 stores the reservation information elements in the reservation information memory unit 10 to set the timer reservation.

In this case, it is noted from FIGS. 25 and 27 that there was a change in the channel to be timer recorded.

To correspond to this, the habit learning control unit 16 executes the renewal registration processing above stated in FIG. 16 on the basis of the registration packet in the step SP56, and then the procedure ends in a step SP57.

Thus, even in a case where the timer reservation is erroneously made, the timer reservation is changed to a correct reservation information with ease by the modification procedure.

In this case, the habit database is changed to the contents which correctly reflect the user's habit by restoring the degree of certainty of the habit database 14 to the previous value.

### (1-2-4) Cancelation of the Timer Reservation

In a case where the timer reservation which has been already set is to be canceled by operating the remote commander 2, the input sentence processing unit 6 and the habit learning control unit 16 restore the habit database 14, which has been renewed in the timer reservation, to the previous state before the timer reservation by executing the procedure in FIG. 28.

More specifically, the input sentence processing unit 6 proceeds from a step SP60 to a step SP61 when the operating member of "Cancel" of the remote commander 2 is turned on. In the step SP61, a message to prompt to confirm whether or not the timer reservation is canceled is displayed.

In this event, the input sentence processing unit 6 displays the reservation information stored in the reservation information memory unit 10 to thereby assist not to cancel timer reservations erroneously by the user.

Subsequently, the input sentence processing unit 6 proceeds to a step SP62, in which the operating member "Yes" for confirmation is activated, and a judgement is made as to whether or not a sentence to the effect that the timer reservation is canceled (hereinafter referred to as cancelation sentence) is inputted.

When the cancelation sentence is inputted, an affirmative result is obtained, and the input sentence processing unit 6 proceeds to a step SP63, in which a cancelation packet is formed according to the reservation information of the concelation sentence inputted and is sent to the habit learning control unit 16.

Furthermore, the input sentence processing unit 6 initializes the contents of the reservation information memory unit 10 and cancels the timer reservations.

A packet ID which is different from that of the registration packet is allotted to the cancelation packet similarly with the modification packet, and the cancelation packet can be thereby discriminated from the registration packet.

To correspond to this, in a step SP64 the habit learning control unit 16 searches reservation information of the same program as the cancelation packet in the habit database 14 and executes the operation of the equation (2) to restore the degree of certainty to the previous value.

When he degree of certainty is restored to the previous value, the input sentence processing unit 6 goes to a step SP65 and the procedure is completed.

Thus, even if the timer reservation is canceled, the habit database 14 can be amended to have contents which correctly reflect the user's habit by restoring the degree of certainty of the habit database 14 to the previous value.

The timer reservation is easily and positively carried out with assistance on the basis of the reservation information registered in the past in the habit database 14.

On the contrary when the operating member "No" is activated in place of the operating member "Yes", a negative result is obtained in the step SP62, and the input sentence processing unit 6 goes to the step SP65 for completing the procedure.

(1-2-5) Periodical Renewal of the Habit Database

The input sentence processing unit 6 and the habit learning control unit 16 execute the procedure shown in FIG. 29 at a predetermined cycle to renew the habit database 14 periodically and thereby reservation information which has not been searched for a long time is disposed of.

More specifically, the input sentence processing unit 6 proceeds from a step SP70 to a step SP71, in which the input sentence processing unit 6 detects the present time of the timer and judges whether or not it is a time to perform periodical renewal.

In a case where it is a time to renew, an affirmative result is obtained (in this embodiment, the periodical renewal is set to be made at midnight from Saturday to Sunday, and hence an affirmative result is obtained at the time), and then the input sentence processing unit 6 goes to a step SP72, in which a renewal packet is sent to the habit learning control unit 16.

A packet ID which is different from those of other packets is assigned to the renewal packet, and data of predetermined values are allotted to reservation information elements.

The habit learning control unit 16 renews the degree of certainty of each element of the reservation information registered in the habit database 14 in a step SP73.

More specifically, in the reservation information of the every week the degree of certainty is reduced by 5% whereas in the reservation information except the every week reservation, the degree of certainty is reduced by 20%.

Furthermore the registration of reservation information of which degree of certainty is below a predetermined value is canceled.

In this manner, elements of the reservation information which have not been searched for a long time gradually decrease in degree of certainty and are finally eliminated from the habit database 14.

Thus, in the habit database 14, reservation information about programs with high frequencies of reservation is accumulated, and thereby a database which reflects the user's habit can be constructed.

When the renewal operation of the degree of certainty is thus completed, the input sentence processing unit 6 proceeds to a step SP74 and ends the procedure.

On the other hand, in a case where it is not a time for periodical renewal, a negative result is obtained in the step SP71, and the input sentence processing unit 6 goes to the step SP74, in which the procedure is completed.

(2) Operation of the Embodiment

When in the construction above, the remote commander 2 is operated to input an input sentence, and the input sentence is analyzed in the input sentence processing unit 6 and is separated into reservation information elements.

In a case where all the reservation information elements which are necessary for the timer reservation are provided in this event, the reservation information elements are stored in the reservation information memory unit 10 and the timer reservation is set.

Furthermore, a registration packet is formed from the reservation information, and the registration packet is outputted to the habit learning control unit 16.

In the habit learning control unit 16, the reservation information of the registration packet is searched from the habit database 14, and thereby the reservation information of the same program reserved in the past is searched.

When the reservation information of the same program was already registered in the habit database 14, the reservation information already registered is renewed, so that the degree of certainty thereof increases.

On the contrary, when the reservation information of the program is not registered, the reservation information of the registration packet is registered in the habit database 14.

In this manner, a database of reservation information of which degree of certainty gradually increases by repeatedly making timer reservations of the same program can be constructed, and the reservation information of the past can be accumulated to reflect the user's habit.

On the other hand, in a case where reservation information is inputted in an incomplete form, an inquiry packet is formed from inputted reservation information elements in the input sentence processing unit 6, and the inquiry packet is sent to the habit learning control unit 16.

In the habit learning control unit 16, the reservation information of the inquiry packet is searched in the habit database 14, and the degree of certainty thereof is point addition processed according to the degree of agreement in reservation information elements. Then, elements of the reservation information are subjected to the foot cutting processing, and a return list is constructed from elements of the reservation information which are not cut.

The return list is displayed one by one by sending to the input sentence processing unit 6 the reservation information in an descending order.

Thus, the past reservation information which is considered to be the reservation information of the same program is displayed, and a timer reservation is carried out by the reservation information after the user's confirmation. In this manner, the timer reservation can be easily and positively achieved so as to reflect the habit of the user.

On the other hand, in a case where the timer reservation already reserved is to be modified, the habit database 14 which has been renewed in the timer reservation is restored to the previous state before the timer reservation, and the degree of certainty of the reservation information is thereby restored to the previous value.

Furthermore, the habit database 14 undergoes a renewal registration processing according to the modified contents, and thereby the timer reservation can be modified with ease even if the timer reservation is erroneously made. The habit database 14 is amended to correctly reflect the user's habit.

In a case where a timer reservation already set is canceled, the habit database 14 which have renewed in the timer reservation is similarly restored to the previous state before the timer reservation, and thereby the habit database 14 can be amended to correctly reflect the habit of the user.

On the other hand, when it is a time for periodical renewal, all the elements of the reservation information of the habit database 14 are renewed to reduce the degrees of certainty thereof, and thereby elements of the reservation information which have not been searched for a long time are disposed of.

Thus, in the habit database 14, the reservation information about programs with high frequencies of reservation is accumulated, and hence a database which reflects the user's habit can be constructed. In this manner, the timer reservation operation by the user can be assisted.

(3) Effects of the Embodiment

According to the construction above, the reservation information which has been reserved in the past is registered in the habit database for each program together with a degree of certainty representing frequency of reservation thereof. The habit database is searched in timer reservation, and the outcome of the search is displayed according to the degree of certainty, so that pieces of the reservation information of the program the user wishes to timer reserve can be displayed one by one, reflecting the habit of the user.

The timer reservation can easily and positively made by the user according to the display of the reservation information.

(4) The Other Embodiments

It is stated in embodiment above described that the habit database is renewed so as to increase the degree of certainty of the reservation information as the reservation thereof is repeated. The present invention is not limited to this and the renewal may be made to reduce the degree of certainty.

In the latter case, a setting may be made in the input sentence processing unit 6 and the habit learning control unit 16 so that the reservation information with a low degree of certainty has a priority.

In the embodiment, there is illustrated a case where in the point addition processing, the degree of certainty of an element of the reservation information is multiplied by a predetermined multiplying factor according to the degree of agreement of the reservation information elements thereof, but the multiplying factor of the point addition processing in the case of agreement is not limited to this. The multiplying factor of the point addition processing may be changed to various values in view of utility.

Furthermore, in the above embodiment it is described that in the case where there is a difference in the reservation end time in the point addition processing, the degree of certainty is weighted according to the difference. However, the present invention is not limited to this but the reservation start time may be also weighted. The weighting processing may be omitted.

The point addition processing of the degree of certainty is described in the embodiment, but the present invention is not limited to this. In place of the point addition processing, the foot cutting values may be switched or the point addition processing may be omitted according to need.

In the process of the timer reservation, the foot cutting values may be switched. When insufficient reservation information elements are repeatedly inputted, the foot cutting values may be switched according to the number of the repetition.

In the embodiment above stated, the user who makes a timer reservation is discriminated according to a reservation sentence, and thereby the timer reservation is assisted for individual users. The present invention is not limited to this. In a case where the discrimination is made by providing an operating member for discrimination to the remote commander, the data of the owner may be omitted.

In the embodiment, it is further described that the past reservation information is registered in the habit database of the memory circuit configuration. The present invention is not limited to this, but the registration may be made in a secondary medium such as a memory card.

In the latter case, memory cards may be assigned to individual users in place of the data of owners.

In the embodiment above described, it is stated that the timer reservation is made using a sentence in the natural language format. The present invention is not limited to this but various reservation information input formats may be widely used.

Furthermore, the case where a timer reservation is achieved, using the remote commander is illustrated in the embodiment. The present invention is not limited to this but various input methods may be applied.

In the embodiment, it is stated that a timer recording is carried out using a video tape recorder. The present invention is not restricted to this but may be widely applied to cases such as to timer record frequency modulation broadcasting or such as to apply the invention so as to actuate a television receiver by a timer.

While there has been described in connection with the preferred embodiments of the invention, it will be obvious to those skilled in the art that various changes and modifications may he made therein without departing from the scope of the invention, which is defined in the appended claims.

## Claims

1. A timer reservation recording system comprising input means (4, 6) for sequentially inputting reservation information elements indicating programs to be recorded and the time for recording and for outputting the reservation information; displaying means (8) for displaying said reservation information; and storing means (10) for storing said reservation information, the system being characterized in that it further comprises;

   database means (14) for storing previously input reservation information together with certainty degree information which is renewed when said reservation information is input and;

   database management means for managing the database of said database means; and wherein:

   when said reservation information elements are input via said inputting means, said database management means searches said stored reservation information for reservation information elements which are similar or identical to the input reservation information elements from said data base means, and displays said searched reservation information as a proposed reservation information element for said each reservation information element input to said input means, according to said certainty degree information of said searched reservation information.

2. A timer reservation recording system according to claim 1, wherein said inputting means has operation members representing one or a plurality of words in a natural language format for inputting said reservation information elements.

3. A timer reservation recording system according to claim 1 or 2, wherein said database management means performs a point addition processing on said degree of certainty for said reservation information stored in said database, when said reservation information currently input is different from the stored reservation information.

4. A timer reservation recording system according to claim 3, wherein a value in the range from 0 to 100 is allocated to each of said reservation information as said degree of certainty, and the value allocated to reservation information reserved for every week is larger than the value allocated to other reservation information.

5. A timer reservation recording system according to claim 3 or 4, wherein said database management means performs point addition processing on said degree of certainty of said stored reservation information, when start time and/or end time of said reservation information currently input is different from start time and/or end time of said stored reservation information.

6. A timer reservation recording system according to claim 5, wherein when said reservation information being input contains insufficient reservation information elements an additional point for said reservation information shared in said database corresponding to said reservation information currently input is weighted according to the type of said reservation information which is insufficient.

7. A timer reservation recording system according to any one of claims 3 to 6, wherein said database management means deletes from the results of the search reservation information having a degree of certainty smaller than a predetermined value.

8. A timer reservation recording system according to any one of claims 3 to 7, wherein when said reservation information input is cancelled, said database management means performs a point subtraction processing on said degree of certainty for the corresponding reservation information stored in said database.

9. A recording apparatus for recording programs under the control of a timer and reservation information including a timer reservation recording system according to any one of the preceding claims.

**Patentansprüche**

1. Programmierbarer Zeitgeber für ein Aufzeichnungsgerät, bestehend aus einer Eingabeeinrichtung (4, 6) zur sequentiellen Eingabe von aufzuzeichnende Programme anzeigenden Programmierinformationselementen und der Zeit zur Aufzeichnung und zur Ausgabe der Programmierinformation,
einer Anzeigeeinrichtung (8) zur Anzeige der Programmierinformation und einer Speichereinrichtung (10) zum Speichern der Programmierinformation,
**gekennzeichnet durch**
eine Datenbankeinrichtung (14) zum Speichern vorher eingegebener Programmierinformation zusammen mit Sicherheitsgradinformation, die erneuert wird, wenn die Programmierinformation eingegeben wird, und
eine Datenbank-Verwaltungseinrichtung zur Verwaltung der Datenbank der Datenbankeinrichtung, wobei
die Datenbank-Verwaltungseinrichtung bei der Eingabe der Programmierinformationselemente über die Eingabeeinrichtung die gespeicherte Programmierinformation auf Programmierinformationselemente absucht, die den eingegebenen Programmierinformationselementen aus der Datenbankeinrichtung ähnlich oder mit diesen identisch sind, und die gesuchte Programmierinformation als ein für jedes in die Eingabeeinrichtung eingegebene Programmierinformationselement vorgeschlagenes Programmierinformationselement entsprechend der Sicherheitsgradinformation der gesuchten Programmierinformation anzeigt.

2. Programmierbarer Zeitgeber für ein Aufzeichnungsgerät nach Anspruch 1, wobei die Eingabeeinrichtung Operationsteile, die ein oder mehrere Wörter in einem natürlichen Sprachformat darstellen, zur Eingabe der Programmierinformationselemente aufweist.

3. Programmierbarer Zeitgeber für ein Aufzeichnungsgerät nach Anspruch 1 oder 2, wobei die Datenbank-Verwaltungseinrichtung am Sicherheitsgrad für die in der Datenbank gespeicherte Programmierinformation eine Punktadditionsverarbeitung ausführt, wenn die zur Zeit eingegebene Programmierinformation verschieden von der gespeicherten Programmierinformation ist.

4. Programmierbarer Zeitgeber für ein Aufzeichnungsgerät nach Anspruch 3, wobei jeder Programmierinformation ein Wert aus dem Bereich von 0 bis 100 als Sicherheitsgrad zugeordnet ist und der Wert, welcher der für jede Woche vorbehaltenen Programmierinformation zugeordnet ist, größer als der Wert ist, der anderer Programmierinformation zugeordnet ist.

5. Programmierbarer Zeitgeber für ein Aufzeichnungsgerät nach Anspruch 3 oder 4, wobei die Datenbank-Verwaltungseinrichtung am Sicherheitsgrad der gespeicherten Programmierinformation eine Punktadditionsverarbeitung ausführt, wenn ein Startzeitpunkt und/oder Endzeitpunkt der zur Zeit eingegebenen Programmierinformation verschieden von einem Startzeitpunkt und/oder Endzeitpunkt der gespeicherten Programmierinformation ist.

6. Programmierbarer Zeitgeber für ein Aufzeichnungsgerät nach Anspruch 3, wobei in dem Fall, daß die eingegebene Programmierinformation unzureichende Programmierinformationselemente enthält, ein zusätzlicher Punkt für die der zur Zeit eingegebenen Programmierinformation entsprechenden und in der Datenbank verteilten Programmierinformation entsprechend der Art der unzureichenden Programmierinformation gewichtet wird.

7. Programmierbarer Zeitgeber für ein Aufzeichnungsgerät nach einem der Ansprüche 3 bis 6, wobei die Datenbank-Verwaltungseinrichtung aus den Ergebnissen der Suche Programmierinformation mit einem Sicherheitsgrad löscht, der kleiner als ein vorbestimmter Wert ist.

8. Programmierbarer Zeitgeber für ein Aufzeichnungsgerät nach einem der Ansprüche 3 bis 7, wobei beim Löschen der eingegebenen Programmierinformation die Datenbank-Verwaltungseinrichtung eine Punktsubtraktionsverarbeitung am Sicherheitsgrad für die entsprechende in der Datenbank gespeicherte korrespondierende Programmierinformation ausführt.

9. Aufzeichnungsgerät zur Aufzeichnung von Programmen gesteuert von einem Zeitgeber und einer Programmierinformation, mit einem Zeitgeber für ein Aufzeichnungsgerät nach einem der vorhergehenden Ansprüche.

**Revendications**

1. Système d'enregistrement de réservation par minuterie comprenant un moyen d'entrée (4, 6) pour entrer séquentiellement des éléments d'information de réservation indiquant des programmes qui doivent être enregistrés et la durée d'enregistrement et pour émettre en sortie l'information de réservation ; un moyen d'affichage (8) pour afficher ladite information de réservation ; un moyen de stockage (10) pour stocker ladite information de réservation, le système étant caractérisé en ce qu'il comprend en outre :

un moyen de base de données (14) pour stocker une information de réservation entrée précédemment ensemble avec une information de degré de certitude qui est renouvelée lorsque ladite information de réservation est entrée ; et un moyen de gestion de base de données pour gérer la base de données dudit moyen de base de données, et dans lequel :

lorsque lesdits éléments de réservation sont entrés via ledit moyen d'entrée, ledit moyen de gestion de base de données recherche dans ladite information de réservation stockée des éléments d'information de réservation qui sont similaires ou identiques aux éléments d'information de réservation entrés dans ledit moyen de base de données et affiche ladite information de réservation recherchée en tant qu'élément d'information de réservation proposé pour chaque dit élément de réservation entré sur ledit élément d'entrée, conformément à ladite information de degré de certitude de ladite information de réservation recherchée.

2. Système d'enregistrement de réservation par minuterie selon la revendication 1, dans lequel ledit moyen d'entrée comporte des éléments de fonctionnement représentant un mot ou une pluralité de mots selon un format d'un langage naturel pour entrer lesdits éléments d'information de réservation.

3. Système d'enregistrement de réservation par minuterie selon la revendication 1 ou 2, dans lequel ledit moyen de gestion de base de données réalise un traitement d'addition de points sur ledit degré de certitude pour ladite information de réservation stockée dans ladite base de données lorsque ladite information de réservation présentement entrée est différente de l'information de réservation stockée.

4. Système d'enregistrement de réservation par minuterie selon la revendication 3, dans lequel une valeur dans la plage de 0 à 100 est allouée à chaque dite information de réservation en tant que dit degré de certitude et la valeur allouée à une information de réservation réservée pour chaque semaine est supérieure à la valeur allouée à une autre information de réservation.

5. Système d'enregistrement de réservation par minuterie selon la revendication 3 ou 4, dans lequel ledit moyen de gestion de base de données réalise un traitement d'addition de points sur ledit degré de certitude de ladite information de réservation stockée lorsqu'un instant de début et/ou un instant de fin de ladite information de réservation présentement entrée est différent de l'instant de début et/ou de l'instant de fin de ladite information de réservation stockée.

6. Système d'enregistrement de réservation par minuterie selon la revendication 5, dans lequel, lorsque ladite information de réservation qui est entrée contient des éléments d'information de réservation insuffisants, un point supplémentaire pour ladite information de réservation partagé dans ladite base de données correspondant à ladite information de réservation présentement entrée est pondéré conformément au type de ladite information de réservation qui est insuffisante.

7. Système d'enregistrement de réservation par minuterie selon l'une quelconque des revendications 3 à 6, dans lequel ledit moyen de gestion de base de données supprime des résultats l'information de réservation de recherche présentant un degré de certitude inférieur à une valeur prédéterminée.

8. Système d'enregistrement de réservation par minuterie selon l'une quelconque des revendications 3 à 7, dans lequel, lorsque ladite entrée d'information de réservation est annulée, ledit moyen de gestion de base de données réalise un traitement de soustraction de points sur ledit degré de certitude pour l'information de réservation correspondante stockée dans ladite base de données.

9. Appareil d'enregistrement permettant d'enregistrer des programmes sous la commande d'une information de réservation par minuterie incluant un système d'enregistrement de réservation par minuterie selon l'une quelconque des revendications précédentes.

FIG.1

FIG.5

FIG.2

| DAY OF THE WEEK |
| --- |
| CONTINUOUS RESERVATION END DAY |
| RESERVATION START TIME |
| RESERVATION END TIME |
| CHANNEL |
| CHANNEL ATTRIBUTE |
| MODE |
| OWNER |
| DEGREE OF CERTAINTY |
| LAG IN START TIME |
| LAG IN END TIME |

└ HABIT DATA BASE

# FIG.3

| PACKET ID |
| --- |
| DAY OF THE WEEK |
| CONTINUOUS RESERVATION END DAY |
| RESERVATION START TIME |
| RESERVATION END TIME |
| CHANNEL |
| CHANNEL ATTRIBUTE |
| MODE |
| OWNER |

└ REGISTRATION PACKET

# FIG.4

MSB                                          LSB

| O | SUN | MON | TUE | WED | THUR | FRI | SAT |

└─ CONTINUOUS RESERVATION END DAY

## FIG.6

MSB                                          LSB

| O | O | O | O'CLOCK |
| O | O | MINUTE |

└ RESERVATION START TIME AND
RESERVATION END TIME

## FIG.7

MSB                                          LSB

| CHANNEL |

## FIG.8

MSB                                          LSB

| O | O | O | O | L | C | S | T |

└ CHANNEL ATTRIBUTE

## FIG.9

MSB | | | | | | | LSB

| 0 | 0 | LP | EP | SP | βⅡ | βⅢ | βⅠ |

MODE

FIG.10

MSB | LSB

| OWNER |

FIG.11

MSB | LSB

| DEGREE OF CERTAINTY |

FIG.12

MSB | LSB

| MINUTE |

LAG IN START TIME AND END TIME

FIG. 13

FIG.14

| DAY OF THE WEEK | SUNDAY |
|---|---|
| CONTINUOUS RESERVATION END DAY | 0 |
| RESERVATION START TIME | 20 : 00 |
| RESERVATION END TIME | 20 : 45 |
| CHANNEL | 1 |
| CHANNEL ATTRIBUTE | T |
| MODE | β II |
| OWNER | 1 |
| DEGREE OF CERTAINTY | 20 |
| LAG IN START TIME | 0 |
| LAG IN END TIME | 0 |

INITIALIZATION REGISTRATION

FIG.17

FIG.15

RENEWAL REGISTRA-TION PROCEDURE — SP20

DATA FOUND? — SP21
NO
YES

DATA EVERY WEEK RESERVATION FOUND? — SP24
YES
NO

IS RESERVATION EVERY WEEK RESERVATION? — SP25
YES → SET EVERY WEEK BIT — SP26
NO

DATA THE SAME IN START TIME AND END TIME FOUND? — SP27
YES
NO

SP22 REGISTRATION

DIFFERENCES EQUAL TO LAGS? — SP28
YES → REGISTER RESERVATION INFORMATION IN DATA BASE — SP31
NO

SP29 WRITE DIFFERENCES IN LAGS

SET LAGS TO ZERO — SP32

RENEW CERTAINTY DEGREE — SP30

END — SP23

FIG.16

| PACKET ID | 1 |
|---|---|
| DAY OF THE WEEK | SUNDAY |
| CONTINUOUS RESERVATION END DAY | 0 |
| RESERVATION START TIME | 19:59 |
| RESERVATION END TIME | 21:00 |
| CHANNEL | 1 |
| CHANNEL ATTRIBUTE | T |
| MODE | βⅡ |
| OWNER | 1 |

REGISTRATION PACKET

## FIG.18

| DAY OF THE WEEK | SUNDAY |
|---|---|
| CONTINUOUS RESERVATION END DAY | 0 |
| RESERVATION START TIME | 20:00 |
| RESERVATION END TIME | 20:45 |
| CHANNEL | 1 |
| CHANNEL ATTRIBUTE | T |
| MODE | βⅡ |
| OWNER | 1 |
| DEGREE OF CERTAINTY | 60 |
| LAG IN START TIME | −1 |
| LAG IN END TIME | 15 |

RENEWAL OF DATA BASE

## FIG.19

| DAY OF THE WEEK | SUNDAY |
|---|---|
| CONTINUOUS RESERVATION END DAY | 0 |
| RESERVATION START TIME | 19 : 59 |
| RESERVATION END TIME | 21 : 00 |
| CHANNEL | 1 |
| CHANNEL ATTRIBUTE | T |
| MODE | βΙΙ |
| OWNER | 1 |
| DEGREE OF CERTAINTY | 80 |
| LAG IN START TIME | 0 |
| LAG IN END TIME | 0 |

└ RENEWAL OF DATA BASE

FIG.20

| WEEK |
|---|
| CONTINUOUS RESERVATION END DAY |
| RESERVATION START TIME |
| RESERVATION END TIME |
| A.M. / P.M. |
| CHANNEL |
| 0 |
| 0 |

└ INQUIRY MASK

FIG.21

| PACKET ID | 2 |
|---|---|
| DAY OF THE WEEK | SUN DAY |
| CONTINUOUS RESERVATION END DAY | 0 |
| RESERVATION START TIME | 20:00 |
| RESERVATION END TIME | 0 |
| CHANNEL | 0 |
| CHANNEL ATTRIBUTE | 0 |
| MODE | 0 |
| OWNER | 0 |

INQURIY PACKET

## FIG.22

| DAY OF THE WEEK | SUN DAY |
|---|---|
| CONTINUOUS RESERVATION END DAY | 0 |
| RESERVATION START TIME | 20:00 |
| RESERVATION END TIME | 20:45 |
| CHANNEL | 1 |
| CHANNEL ATTRIBUTE | T |
| MODE | βⅡ |
| OWNER | 1 |
| DEGREE OF CERTAINTY | 80 |

RETURN LIST

## FIG.23

MODIFICATION OF RESERVATION INFORMATION ── SP50

DISPLAY MESSAGE TO PROMPT INPUT ── SP51

MODIFICATION SENTENCE INPUTTED? ── SP52 ─── NO

↓ YES

SEND MODIFICATION PACKET ACCORDING TO CONTENTS OF RESERVATION BEFORE MODIFICATION ── SP53

RESTORE CERTAINTY DEGREE OF DATA ── SP54

SEND REGISTRATION PACKET ACCORDING TO CONTENTS OF MODIFIED RESERVATION ── SP55

RENEW REGISTRATION ── SP56

END ── SP57

FIG.24

| PACKET ID | 3 |
|---|---|
| DAY OF THE WEEK | SUNDAY |
| CONTINUOUS RESERVATION END DAY | 0 |
| RESERVATION START TIME | 20:00 |
| RESERVATION END TIME | 20:45 |
| CHANNEL | 1 |
| CHANNEL ATTRIBUTE | T |
| MODE | βⅡ |
| OWNER | 1 |

MODIFICATION PACKET AND CANCELATION PACKET

## FIG.25

| DAY OF THE WEEK | SUNDAY |
|---|---|
| CONTINUOUS RESERVATION END DAY | 0 |
| RESERVATION START TIME | 19:59 |
| RESERVATION END TIME | 21:00 |
| CHANNEL | 1 |
| CHANNEL ATTRIBUTE | T |
| MODE | βⅡ |
| OWNER | 1 |
| DEGREE OF CERTAINTY | 80 → 60 |

MODIFIED OR CANCELED DATA BASE

## FIG.26

| PACKET ID | 1 |
|---|---|
| DAY OF THE WEEK | SUNDAY |
| CONTINUOUS RESERVATION END DAY | 0 |
| RESERVATION START TIME | 20:00 |
| RESERVATION END TIME | 20:45 |
| CHANNEL | 3 |
| CHANNEL ATTRIBUTE | T |
| MODE | $\beta \mathrm{II}$ |
| OWNER | 1 |

REGISTRATION PACKET

## FIG.27

SP60 — ( CANCELATION OF RESERVATION INFORMATION )

SP61 — [ DISPLAY MESSAGE TO PROMPT INPUT ]

SP62 — < CANCELATION SENTENCE INPUTTED? > — NO

↓ YES

SP63 — [ OUTPUT CANCELATION PACKET ]

SP64 — [ RESTORE CERTAINTY DEGREE OF DATA ]

SP65 — ( END )

## FIG.28

SP70 — PERIODICAL RENEW-
AL OF RESERVATION
INFORMATION

SP71 — IS IT TIME TO
PERIODICALLY
RENEW? — NO

YES

SP72 — OUTPUT RENEWAL
PACKET

SP73 — RENEW CERTAINTY
DEGREE OF ALL DATA
IN TIME ORDER

SP74 — END

FIG.29